# EUROPEAN PATENT SPECIFICATION

(11) **EP 1 142 380 B1**
(45) Date of publication and mention of the grant of the patent: **13.09.2006**
(21) Application number: 99973518.6
(22) Date of filing: 04.11.1999
(51) Int. Cl.: H04Q 7/22, H04Q 7/32, H04B 7/185, H04Q 7/38

(54) **COMMUNICATION SYSTEM CONTAINING INFORMATION ABOUT DIFFERENT TIME ZONES IN WHICH MOBILE STATIONS ARE LOCATED**
KOMMUNIKATIONSSYSTEM DAS INFORMATIONEN ENTHÄLT ÜBER VERSCHIEDENE ZEITZONEN WO MOBILGERÄTE SICH BEFINDEN
SYSTEME DE COMMUNICATION CONTENANT DES INFORMATIONS RELATIVES A DIFFERENTES ZONES HORAIRES DANS LESQUELLES SONT SITUEES DES STATIONS MOBILES

(30) Priority: 18.12.1998 EP 98124068
(43) Date of publication of application: 10.10.2001
(73) Proprietor: TELEFONAKTIEBOLAGET LM ERICSSON (publ), 164 83 Stockholm (SE)
(72) Inventor: KAIBEL, Martin, S-520 70 Aachen (DE); SHARIFAN, Hashem, D-52146 Würselen (DE); MAEKINIEMI, Petri, D-52146 Würselen (DE)
(74) Representative: Kribber, Klaus-Dieter
(86) International application number: PCT/EP1999/008452
(87) International publication number: WO 2000/038442

(56) References cited:
- EP-A- 0 475 298
- WO-A-97/35450
- US-A- 5 027 387
- US-A- 5 625 668
- US-A- 5 818 920

## Description

The present invention relates to a multiple access communication system with at least one access node, wherein said access node interfaces with a plurality of mobile user equipment.

The invention further concerns a method for managing a multiple access communication system, wherein at least one access node interfaces with a plurality of mobile user equipment.

Multiple access communication systems such as cellular and/or satellite based telephone systems developed significantly in operations world-wide. Innovative solutions are required to meet increasing service demands of a rapidly growing number of users.

As extensions of multiple access communication systems strongly increase the communication system has to be designed in a way which allows an efficient handling of access of the mobile user equipment to the communication system.

Current multiple access communication systems include an information of a system time in a centralised unit. The system time is identical for all users of the communication system. Future telecommunication systems will serve areas, that will include more than one time zone and hence will have to take local times in account.

US patent 5,818,920 describes a telecommunication system with prevention means that inform a calling subscriber about the time zone a called subscriber is located in. The prevention means use a memory, for example a home location register, for storing the time zone information. It is not disclosed how this information can be stored advantageously. It is not disclosed, too, how the system can be updated for example in the case of time variations due to summertime and wintertime shifts.

European patent application 0 475 298 discloses a timekeeping apparatus displaying the local time. The apparatus receives an area identification from a cellular network and compares it with stored time zone information. The information can be pre-stored by an operator or entered manually.

This apparatus has the shortcoming that time zone information is stored highly distributed increasing the effort for updating and the demand for memory.

US patent 5,625,668 discloses a position reporting cellular telephone. To determine the local time valid at the location of the phone, the latitude and longitude of its location are determined. Afterwards, the location is compared with stored time zone boundaries.
This phone has the shortcoming that it requires a system for determining the longitude and latitude information. Furthermore, said information has to be processed and compared with time zone boundaries. Regarding the large number of cellular phones this requires processing capacity to a high extent.

It is an object of the present invention to create a multiple access communication system, which operates efficiently according to a differentiation of time zones local times.

This will be solved advantageously by the teaching of the independent claims.

A further object of the invention is a method for managing a multiple access communication system, wherein at least one access node interfaces with a plurality of mobile user equipment, which is carried out in a way that at least one parameter of communication depends on the time zone and/or local time in which the mobile user equipment are located.

Another object of the invention is to supply processing means for a multiple access communication system.

A further object of the invention is a mobile user equipment, capable of communicating in a multiple access communication system.

Further advantageous embodiments and implementations are achieved according to the dependent claims.

The invention makes use of the idea that information about time and/or a time zone of each separate user is available in at least one access node of the communication system.

According to the invention, the problem is solved by a multiple access communication system with at least one access node, wherein said access node interfaces with a plurality of mobile user equipment which is accomplished in a way, that the access node and/or the mobile user equipment contain information about different time zones and/or local times in locations in which the mobile user equipment are located.

The information of the time zones concerns the time zone in which the mobile user equipment is located. This time zone is not to necessarily the time zone in which the access node is located. The time zone information could be in example given as the difference between the local time or time zone and the centralised system time. For achieving a call optimisation, it is possible that an access node in a first time zone interfaces with a mobile user equipment in a second time zone. The access node, especially a ground station of a satellite based communication system, preferably contains information about the time zone in which every mobile user equipment that interfaces or could interface with the access node is located.

The mobile user equipment is, for example, a mobile terminal such as a hand-held computer, a notebook-computer, a mobile telephone apparatus or a mobile multimedia system.

The access node gives the mobile user equipment access to a terrestrial communication system or to a further mobile communication system.

In an advantageous implementation of the communication system, the method, the processing means, and the mobile user equipment, at least one parameter of communication depends on the time zone and/or local time in which the mobile user equipment are located.

In a further advantageous implementation of the communication system, the method, the processing means, and the mobile user equipment, the access node contains information about different time zones and/or local times in locations in which the mobile user equipment can be located.

In a further advantageous implementation of the communication system, the method, the processing means, and the mobile user equipment, each access node contains information about different time zones and/or local times in locations in which the mobile user equipment can be located.

In a preferred embodiment of the communication system, the method, the processing means, and the mobile user equipment, the communication system is capable of modifying at least one parameter of communication for at least one of the mobile user equipment depending on the time zone and/or local time in which the mobile user equipment is located.

In an advantageous implementation of the communication system, the method, the processing means, and the mobile user equipment, the access node is equipped with a means that contains locations of mobile user equipment and processes information on the time zone and/or local time in the locations in which the users can be located.

In a preferred embodiment of the communication system, the method, the processing means, and the mobile user equipment, the access node is equipped with means that checks locations of mobile user equipment and processes information on the time zone and/or local time in the location in which the users can be located.

In an advantageous implementation of the communication system, the method, the processing means, and the mobile user equipment, the parameter of communication is handled differently for mobile user equipment located in locations with different time zones and/or different local times.

In a preferred embodiment of the communication system, the method, the processing means, and the mobile user equipment, it is checked, whether a mobile user equipment has crossed a time zone boundary.

In a further advantageous implementation of the communication system, the method, the processing means, and the mobile user equipment, it is checked during a handover, whether a mobile user equipment has crossed a time zone boundary.

In a preferred embodiment of the communication system, the method, the processing means, and the mobile user equipment, at least one parameter of communication or a parameter of a handling of the communication is modified after the mobile user equipment has crossed a time zone boundary.

In an advantageous implementation of the communication system, the method, the processing means, and the mobile user equipment, the access node receives positions of the mobile user equipment.

In a preferred embodiment of the communication system, the method, the processing means, and the mobile user equipment, the communication system is a cellular system and the locations are constituted by cells.

The cells may be virtual cells derived from assigning location information to cellular information.

For a clear distinction whether a certain user is located in a well-defined time zone, it is advantageous that the cells have an extension which is limited so that the cells do not cross time zone boundaries.

In a first implementation of the invention, the access node could be an antenna equipped with additional functions to handle information about time and/or time zone of the mobile user equipment.

However, it is more advantageous for the communication system, the method, the processing means, and the mobile user equipment, that the access node functions as logical node. A logical node in this context means a node that performs a logical analysis and treatment of data flow processes. The logical node performs an administration of static data. Static data are stored within the node. For example, static data are the time zone information for each cell. Dynamic data are transferred through the node. The analysis and the treatment performed by the logical node is related to the static data as well as to dynamic data such as information about the cell in which the mobile user equipment is located.

In an especially advantageous implementation of the invention, the logical analysis is based on the time zone in which the mobile user equipment are located.

In a preferred embodiment of the communication system, the method, the processing means, and the mobile user equipment, the access node is capable of creating charging information depending on local times of users and/or time zones in which they are located.

In an advantageous embodiment of the communication system, the method, the processing means, and the mobile user equipment, other logical functions of the communication system, the method, the processing means, and the mobile user equipment depend on the time zone in which a certain user is located. For example, the access node is capable of creating call forwarding information depending on local times of users and/or time zones in which they are located.

The described implementations and embodiments do not limit the scope of suitable access nodes. However, it is preferred that the access node is capable of giving the mobile user equipment access to a second part of the communication system or to a further communication system.

In a preferred embodiment of the communication system, the method, the processing means, and the mobile user equipment, the processing means is capable of determining a time zone and/or local time in which a mobile user equipment is located.

More specifically the processing means is capable of differentiating between different time zones and/or local times in which a mobile user equipment is located.

In a preferred embodiment of the communication system, the method, the processing means, and the mobile user equipment, the processing means is capable of modifying at least one parameter of communication depending on the time zone and/or local time in which a mobile user equipment is located.

In an advantageous implementation of the communication system, the method, the processing means, and the mobile user equipment, the mobile user equipment contains information about a time zone and/or a local time in a location in which the mobile user equipment is located.

In a preferred embodiment of the communication system, the method, the processing means, and the mobile user equipment, the mobile user equipment is capable of modifying at least one parameter of communication depending on the time zone and/or local time in which the mobile user equipment is located.

In an advantageous implementation of the communication system, the method, the processing means, and the mobile user equipment, the mobile user equipment contains a device for determining its position. A preferred example of this device is a receiver for signals of a Global Positioning System (GPS). Another preferred example of this device is a means using the location derivation supported by GSM. The antennas of the mobile user equipment receive these signals and an implemented evaluation means determines their positions by the analysis of these signals. The mobile user equipment are capable of sending their position to the access node of the communication system.

In the following the invention will be further described by means of examples and by means of the figures. The following figures show:
- Fig. 1: shows a schematic of an implementation of a regional satellite based communication system,
- Fig. 2: shows a schematic of a call optimisation in a regional satellite based communication system and
- Fig. 3: shows a functional schematic of an internal structure of a ground station of a satellite based communication system as described according to Fig. 1 or Fig. 2.

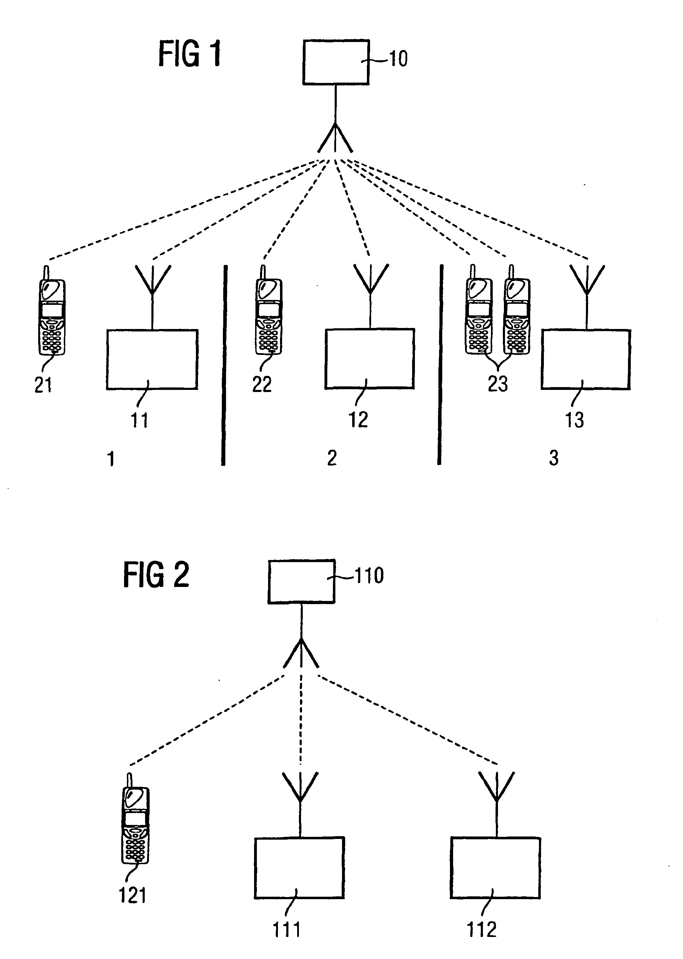

According to figures 1, 2 and 3 the present invention is described in conjunction with a satellite based communication system. However, the invention also includes other communication systems like an Universal Mobile Telecommunication System (UMTS) or the Global System for Mobile Communication (GSM) as well. In these implementations, the access node is constituted by an access node of a cellular mobile communication system, especially a base station or a radio network controller.

The satellite based communication system described according to figures 1, 2 and 3, contains several ground stations GS which are access nodes. Each access node is capable of giving the mobile user equipment access to a second part of the communication system or to a further communication system.

The satellite based implementation of the invention as well as conventional mobile communication systems are accomplished with a second part of the communication system or a separate communication system. It is advantageous, that the second part of the communication system or the separate communication system is constituted by a wired communication system, a wireless communication system or a cellular communication system.

The satellite based communication system shown in Fig. 1 covers time zones 1, 2 and 3. The time zones 1, 2 and 3 are located within a coverage area of a satellite 10, which is in an orbital position that is high enough to cover more than one time zone. A broad coverage in conjunction with a low number of necessary satellites is preferably obtained by positioning the satellite 10 in a geostationary position. However, the explained concepts apply to satellites in lower orbits as well as to extended mobile networks.

The number of ground stations relates to the number of users. In a first implementation of the communication system only one ground station is necessary for serving the whole communication system. The number of ground stations increases as the demand for using the system grows. The number of ground stations located within one time zone may vary from zero to an arbitrary value. Also, the number of time zones may vary from 2 to 24. The schematic representation according to figure 1 of one ground station 11, 12 or 13 located in each of the time zones 1, 2 and 3 has been chosen to give a better understanding. It does not limit the scope of the invention.

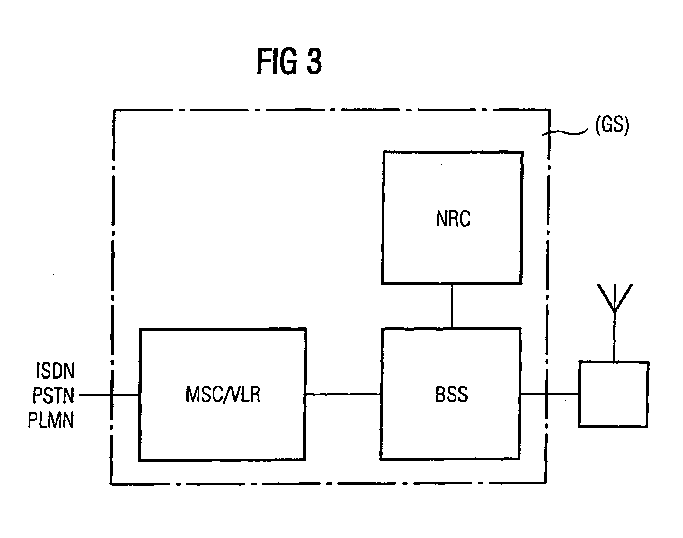

In this implementation every ground station handles calls from mobile terminals 21, 22 or 23, being in its area. In Figure 3, the service area of the ground station equals the service area of a mobile services switching centre. This was done to give an example and does not limit the scope of the invention, which is only defined by the appended claims.

The second implementation of a regional satellite based network as illustrated in figure 2 uses a call optimisation. Which ground station 112 optimally handles the call is decided before establishing or during early phases of an originating call from a mobile user equipment 121. This call optimisation is carried out with a minimal use of terrestrial resources.

Each of the ground stations 111, 112 contains a network resource controller NRC which checks on the location of called subscriber and initiates location update with a location area code that contains information about the identity of an optimal mobile services switching centre MSC in an optimal ground station. The network resource controller NRC manages satellite resources that are allocated to the ground station by an operator. These satellite resources are especially traffic channels and spot beams.

The mobile user equipment 121 subsequently re-registers in the optimal ground station and the call set up continues with reception of a service request.

An internal structure of a ground station used in the satellite based communication systems is described according to the figures 1 and 2 is represented in greater detail in figure 3.

The ground station provides connectivity between the satellite and a second wired communication system, a wireless communication system or a cellular communication system.

The ground station GS contains a base station subsystem. The base station subsystem BSS implements a radio interface towards the mobile user equipment. It corresponds to the base station subsystem in a cellular mobile communication system as the GSM.

The base station subsystem interacts with means for obtaining dynamically spectral resources per call. Several means may be connected to a mobile services switching centre and/or a visitor location register VLR.

The mobile services switching centre / visitor location register is preferably also integrated within the ground station and allows its access to a second part of the communication network, for example, a fixed network such as an Integrated Service Digital Network ISDN, a Public Switched Telephone Network PSTN or a mobile network such as a Public Land Mobile Network PLMN.

The described examples refer to a satellite based communication system with a low number of satellites. An implementation with a higher number of satellites is possible too. In this case the network resource controller NRC manages the satellite resources of more than one satellite.

However, the outlined implementation of the communication system, the method, and the processing means can also be adapted to other communication systems such as a cellular mobile network as well.

## Claims

1. An access node for a multiple access communication system, wherein said access node interfaces with a plurality of mobile user equipment (21, 22, 23, 121), **characterised in that** the access node contains information about different time zones and/or local times of cells in which the mobile user equipment (21, 22, 23, 121) is located.

2. The access node according to claim 1, **characterised in that** the access node is equipped with a means that contains locations of mobile user equipment (21, 22, 23, 121) and processes information on the time zone and/or local time in the cells in which the users can be located.

3. The access node according to claim 1 or 2, **characterised in that** the access node is equipped with a means that checks locations of mobile user equipment (21, 22, 23, 121) and processes information on the time zone and/or local time in the cells in which the users can be located.

4. The access node according to any of the claims 1 to 3, **characterised in that** the access node receives positions of the mobile user equipment (21, 22, 23, 121).

5. The access node according to any of the claims 1 to 4, **characterised in that** the access node is capable of creating charging information depending on local times of mobile user equipment (21, 22, 23, 121) and/or time zones in which they are located.

6. The access node according to any of the claims 1 to 5, **characterised in that** the access node is capable of creating call forwarding information depending on local times of users (21,22,23,121) and/or time zones in which they are located.

7. The access node according to any of the claims 1 to 6, **characterised in that** the access node is a ground station (GS, 11, 12, 13; 111, 112) of a satellite based communication system.

8. A multiple access communication system comprising at least one access node according to any of the claims 1 to 7, capable of modifying at least one parameter of communication for at least one of the mobile user equipment (21, 22, 23, 121) depending on the time zone and/or local time of a cell in which the mobile user equipment (21, 22, 23, 121) is located.

9. The communication system according to claim 8, **characterised in that** the parameter of communication is handled differently for mobile user equipment (21, 22, 23, 121) located in cells with different time zones and/or different local times.

10. The communication system according to claim 8 or 9, **characterised in that** it is capable of a checking, whether a mobile user equipment (21, 22, 23, 121) has crossed a time zone boundary.

11. The communication system according to claim 10, **characterised in that** it is capable of checking during a handover, whether a mobile user equipment (21, 22, 23, 121) has crossed a time zone boundary.

12. The communication system according to any of the claims 8 to 11, **characterised in that** after the mobile user equipment (21, 22, 23, 121) has crossed a time zone boundary, at least one parameter of communication or a parameter of a handling of the communication is modified.

13. The communication system according to any of the claims 8 to 12, **characterised in that** the communication system is equipped with a Network Resource Controller and the Network Resource Controller contains and/or checks locations of mobile user equipment (21, 22, 23, 121) and adds information on the time zone and/or local time of the cell in which they are located.

14. The communication system according to any of the claims 8 to 13, **characterised in that** the cells have an extension which is as much limited as the cells do not cross time zone boundaries.

15. A method for managing a multiple access communication system, with at least one access node interfacing with a plurality of mobile user equipment (21, 22, 23, 121), **characterised in that** the access node stores information about different time zones and/or local times of cells in which the mobile user equipment (21, 22, 23, 121) is located.

16. The method of claim 15,
**characterised in that** at least one parameter of communication determined depending on the time zone and/or local time in which the mobile user equipment (21, 22, 23, 121) is located.

17. The method according to claim 15 or 16, **characterised in that** at least one parameter of communication is modified depending on the time zone and/or local time in which a mobile user equipment (21, 22, 23,121) is located.

18. The method according to claim 15, 16 or 17, **characterised in that** the parameter of communication is handled differently for mobile user equipment (21, 22, 23, 121), which are located in cells with different time zones and/or different local times.

19. The method according to any of the claims 15 to 18, **characterised in that** the parameter influences a forwarding of calls or a charging of a call.

20. The method according to any of the claims 15 to 19, **characterised in that** it is checked, whether a mobile user equipment (21, 22, 23, 121) has crossed a time zone boundary.

21. The method according to claim 20, **characterised in that** it is checked during a handover, whether a mobile user equipment (21, 22, 23, 121) has crossed a time zone boundary.

22. The method according to any of the claims 15 to 21, **characterised in that** after the mobile user equipment (21, 22, 23, 121) has crossed a time zone boundary at least one parameter of communication or a parameter of a handling of the communication is modified.

## Patentansprüche

1. Zugangsknoten für ein Kommunikationssystem mit Mehrfachzugriff, wobei der Zugangsknoten Schnittstellen zu mehreren Mobilbenutzereinrichtungen (21, 22, 23, 121) aufweist, **dadurch gekennzeichnet, dass** der Zugangsknoten Informationen über unterschiedliche Zeitzonen und/oder Ortszeiten von Zellen, in denen sich die Mobilbenutzereinrichtung (21, 22, 23, 121) befindet, enthält.

2. Zugangsknoten nach Anspruch 1, **dadurch gekennzeichnet, dass** der Zugangsknoten mit einem Mittel ausgestattet ist, das Standorte von Mobilbenutzereinrichtungen (21, 22, 23, 121) enthält und Informationen zu der Zeitzone und/oder Ortszeit in den Zellen, in denen sich die Benutzer befinden können, verarbeitet.

3. Zugangsknoten nach Anspruch 1 oder 2, **dadurch gekennzeichnet, dass** der Zugangsknoten mit einem Mittel ausgestattet ist, das Standorte von Mobilbenutzereinrichtungen (21, 22, 23, 121) überprüft und Informationen zu der Zeitzone und/oder Ortszeit in den Zellen, in denen sich die Benutzer befinden können, verarbeitet.

4. Zugangsknoten nach einem der Ansprüche 1 bis 3, **dadurch gekennzeichnet, dass** der Zugangsknoten Positionen der Mobilbenutzereinrichtungen (21, 22, 23, 121) empfängt.

5. Zugangsknoten nach einem der Ansprüche 1 bis 4, **dadurch gekennzeichnet, dass** der Zugangsknoten Abrechnungsinformationen in Abhängigkeit von Ortszeiten von Mobilbenutzereinrichtungen (21, 22, 23, 121) und/oder Zeitzonen, in denen sie sich befinden, erstellen kann.

6. Zugangsknoten nach einem der Ansprüche 1 bis 5, **dadurch gekennzeichnet, dass** der Zugangsknoten Rufweiterleitungsinformationen in Abhängigkeit von Ortszeiten von Benutzern (21, 22, 23, 121) und/oder Zeitzonen, in denen sie sich befinden, erstellen kann.

7. Zugangsknoten nach einem der Ansprüche 1 bis 6, **dadurch gekennzeichnet, dass** es sich bei dem Zugangsknoten um eine Bodenstation (ground station, GS, 11, 12, 13; 111, 112) eines satellitenbasierten Kommunikationssystems handelt.

8. Kommunikationssystem mit Mehrfachzugriff mit mindestens einem Zugangsknoten nach einem der Ansprüche 1 bis 7, geeignet zum Modifizieren von mindestens einem Parameter einer Kommunikation für mindestens eine der Mobilbenutzereinrichtungen (21, 22, 23, 121) in Abhängigkeit von der Zeitzone und/oder der Ortszeit einer Zelle, in der sich die Mobilbenutzereinrichtung (21, 22, 23, 121) befindet.

9. Kommunikationssystem nach Anspruch 8, **dadurch gekennzeichnet, dass** der Parameter der Kommunikation für Mobilbenutzereinrichtungen (21, 22, 23, 121), die sich in Zellen mit unterschiedlichen Zeitzonen und/oder unterschiedlichen Ortszeiten befinden, unterschiedlich behandelt wird.

10. Kommunikationssystem nach einem der Ansprüche 8 bis 9, **dadurch gekennzeichnet, dass** es zu einer Überprüfung in der Lage ist, ob eine Mobilbenutzereinrichtung (21, 22, 23, 121) eine Zeitzonengrenze überschritten hat.

11. Kommunikationssystem nach Anspruch 10, **dadurch gekennzeichnet, dass** es während eines Handovers zu einer Überprüfung in der Lage ist, ob eine Mobilbenutzereinrichtung (21, 22, 23, 121) eine Zeitzonengrenze überschritten hat.

12. Kommunikationssystem nach einem der Ansprüche 8 bis 11, **dadurch gekennzeichnet, dass**, nachdem die Mobilbenutzereinrichtung (21, 22, 23, 121) eine Zeitzonengrenze überschritten hat, mindestens ein Kommunikationsparameter oder ein Parameter einer Abwicklung der Kommunikation modifiziert wird.

13. Kommunikationssystem nach einem der Ansprüche 8 bis 12, **dadurch gekennzeichnet, dass** das Kommunikationssystem mit einem Netzressourcen-Controller ausgestattet ist und der Netzressourcen-Controller Standorte von Mobilbenutzereinrichtungen (21, 22, 23, 121) enthält und/oder überprüft und Informationen zu der Zeitzone und/oder Ortszeit der Zelle, in der sie sich befinden, hinzufügt.

14. Kommunikationssystem nach einem der Ansprüche 8 bis 13, **dadurch gekennzeichnet, dass** die Zellen eine Ausdehnung aufweisen, die soweit eingeschränkt ist, dass die Zellen Zeitzonengrenzen nicht überschreiten.

15. Verfahren zum Verwalten eines Kommunikationssystems mit Mehrfachzugriff mit mindestens einem Zugangsknoten, der mit mehreren Mobilbenutzereinrichtungen (21, 22, 23, 121) verbunden ist, **dadurch gekennzeichnet, dass** der Zugangsknoten Informationen über unterschiedliche Zeitzonen und/oder Ortszeiten von Zellen, in denen sich die Mobilbenutzereinrichtung (21, 22, 23, 121) befindet, speichert.

16. Verfahren nach Anspruch 15, **dadurch gekennzeichnet, dass** mindestens ein Kommunikationsparameter in Abhängigkeit von der Zeitzone und/oder Ortszeit, in der sich die Mobilbenutzereinrichtung (21, 22, 23, 121) befindet, bestimmt wird.

17. Verfahren nach Anspruch 15 oder 16, **dadurch gekennzeichnet, dass** mindestens ein Kommunikationsparameter in Abhängigkeit von der Zeitzone und/oder Ortszeit, in der sich eine Mobilbenutzereinrichtung (21, 22, 23, 121) befindet, modifiziert wird.

18. Verfahren nach Anspruch 15, 16 oder 17, **dadurch gekennzeichnet, dass** der Kommunikationsparameter für Mobilbenutzereinrichtungen (21, 22, 23, 121), die sich in Zellen mit unterschiedlichen Zeitzonen und/oder unterschiedlichen Ortszeiten befinden, unterschiedlich behandelt wird.

19. Verfahren nach einem der Ansprüche 15 bis 18, **dadurch gekennzeichnet, dass** der Parameter ein Weiterleiten von Anrufen oder eine Abrechnung eines Anrufs beeinflusst.

20. Verfahren nach einem der Ansprüche 15 bis 19, **dadurch gekennzeichnet, dass** überprüft wird, ob eine Mobilbenutzereinrichtung (21, 22, 23, 121) eine Zeitzonengrenze überschritten hat.

21. Verfahren nach Anspruch 20, **dadurch gekennzeichnet, dass** während eines Handovers überprüft wird, ob eine Mobilbenutzereinrichtung (21, 22, 23, 121) eine Zeitzonengrenze überschritten hat.

22. Verfahren nach einem der Ansprüche 15 bis 21, **dadurch gekennzeichnet, dass**, nachdem die Mobilbenutzereinrichtung (21, 22, 23, 121) eine Zeitzonengrenze überschritten hat, mindestens ein Kommunikationsparameter oder ein Parameter einer Abwicklung der Kommunikation modifiziert wird.

## Revendications

1. Noeud d'accès d'un système de communication à accès multiple, dans lequel ledit noeud d'accès s'interface avec une pluralité d'équipements d'utilisateurs mobiles (21,22,23,121), **caractérisé en ce que** le noeud d'accès contient des informations relatives aux différerit(e)s fuseaux horaires et/ou heures locales des cellules dans lesquelles l'équipement d'utilisateur mobile (21,22,23,121) est situé.

2. Noeud d'accès selon la revendication 1, **caractérisé en ce que** le noeud d'accès est équipé d'un moyen qui contient les positions des équipements d'utilisateurs mobiles (21,22,23,121) et traite les informations relatives au fuseau horaire et/ou l'heure locale dans les cellules dans lesquelles les utilisateurs peuvent être situées.

3. Noeud d'accès selon la revendication 1 ou 2, **caractérisé en ce que** le noeud d'accès est équipé d'un moyen qui vérifie la position de l'équipement d'utilisateur mobile (21,22,23,121) et traite les informations relatives au fuseau horaire et/ou l'heure locale dans les cellules dans lesquelles les utilisateurs peuvent être situées.

4. Noeud d'accès selon l'une quelconque des revendications 1 à 3, **caractérisé en ce que** le noeud d'accès reçoit des positions de l'équipement d'utilisateur mobile (21,22,23,121).

5. Noeud d'accès selon l'une quelconque des revendications 1 à 4, **caractérisé en ce que** le noeud d'accès est capable de créer des informations de facturation en fonction des heures locales des équipements d'utilisateurs mobiles (21,22,23,121) et/ou des fuseaux horaires dans lesquels ils sont situés.

6. Noeud d'accès selon l'une quelconque des revendications 1 à 5, **caractérisé en ce que** le noeud d'accès est capable de créer des informations de réacheminement d'appel en fonction de l'heure locale des utilisateurs (21,22,23,121) et/ou des fuseaux horaires dans lesquels ils sont situés.

7. Noeud d'accès selon l'une quelconque des revendications 1 à 6, **caractérisé en ce que** le noeud d'accès est une station au sol (GS,11,12,13 ; 111,112) d'un système de communication par satellite.

8. Système de communication à accès multiple comportant au moins un noeud d'accès selon l'une quelconque des revendications 1 à 7, capable de modifier au moins un paramètre de communication d'au moins un équipement d'utilisateur mobile (21,22,23,121) en fonction du fuseau horaire et/ou l'heure locale d'une cellule dans laquelle l'équipement d'utilisateur mobile (21,22,23,121) est situé.

9. Système de communication selon la revendication 8, **caractérisé en ce que** le paramètre de communication est géré différemment en ce qui concerne les équipements d'utilisateurs mobiles (21,22,23,121) situés dans des cellules ayant des fuseaux horaires différents et/ou des heures locales différentes.

10. Système de communication selon la revendication 8 ou 9, **caractérisé en ce qu'**il est capable de vérifier si un équipement d'utilisateur mobile (21,22,23,121) a dépassé une limite de fuseau horaire.

11. Système de communication selon la revendication 10, **caractérisé en ce qu'**il est capable de vérifier pendant un transfert si un équipement d'utilisateur mobile (21,22,23,121) a dépassé une limite de fuseau horaire.

12. Système de communication selon l'une quelconque des revendications 8 à 11, **caractérisé en ce que**, après que l'équipement d'utilisateur mobile (21,22,23,121) a dépassé une limite de fuseau horaire, au moins un paramètre de communication ou un paramètre de gestion de la communication est modifié.

13. Système de communication selon l'une quelconque des revendications 8 à 12, **caractérisé en ce que** le système de communication est équipé d'un contrôleur des ressources du réseau et le contrôleur des ressources du réseau contient et/ou vérifie des positions d'équipements d'utilisateurs mobiles (21,22,23,121) et ajoute des informations relatives au fuseau horaire et/ou à l'heure locale de la cellule dans laquelle ils sont situés.

14. Système de communication selon l'une quelconque des revendications 8 à 13, **caractérisé en ce que** les cellules ont une extension qui est limitée dans la mesure où les cellules ne dépassent pas des limites de fuseau horaire.

15. Procédé de gestion d'un système de communication à accès multiple, comportant au moins un noeud d'accès s'interfaçant avec une pluralité d'équipements d'utilisateurs mobiles (21,22,23,121), **caractérisé en ce que** le noeud d'accès mémorise des informations relatives aux différent(e)s fuseaux horaires et/ou heures locales des cellules dans lesquelles les équipements d'utilisateurs mobiles (21,22,23,121) sont situés.

16. Procédé de la revendication 15, **caractérisé par** au moins un paramètre de communication déterminé en fonction du fuseau horaire et/ou l'heure locale dans lesquels l'équipement d'utilisateur mobile (21,22,23,121) est situé.

17. Procédé selon la revendication 15 ou 16, **caractérisé en ce que** au moins un paramètre de communication est modifié en fonction du fuseau horaire et/ou l'heure locale dans lesquels un équipement d'utilisateur mobile (21,22,23,121) est situé.

18. Procédé selon la revendication 15,16 ou 17, **caractérisé en ce que** le paramètre de communication est géré différemment en ce qui concerne les équipements d'utilisateurs mobiles (21,22,23,121) qui sont situés dans des cellules ayant des fuseaux horaires différents et/ou des heures locales différentes.

19. Procédé selon l'une quelconque des revendications 15 à 18, **caractérisé en ce que** le paramètre influence un réacheminement des appels ou une facturation d'un appel.

20. Procédé selon l'une quelconque des revendications 15 à 19, **caractérisé en ce qu'**il vérifie si un équipement d'utilisateur mobile (21,22,23,121) a dépassé une limite de fuseau horaire.

21. Procédé selon la revendication 20, **caractérisé en ce qu'**il vérifie pendant un transfert si un équipement d'utilisateur mobile (21,22,23,121) a dépassé une limite de fuseau horaire.

22. Procédé selon l'une quelconque des revendications 15 à 21, **caractérisé en ce que**, après que l'équipement d'utilisateur mobile (21,22,23,121) a dépassé une limite de fuseau horaire, au moins un paramètre de communication ou un paramètre de gestion de la communication est modifié.
